# EUROPEAN PATENT APPLICATION

(11) **EP 3 972 017 A1**
(43) Date of publication of application: **23.03.2022**
(21) Application number: 20914611.7
(22) Date of filing: 30.11.2020
(51) Int. Cl.: H01M 4/62

(54) **COBALT-FREE LAYERED POSITIVE ELECTRODE MATERIAL AND PREPARATION METHOD THEREFOR, AND LITHIUM-ION BATTERY**

(30) Priority: 17.01.2020 CN 202010054735
(71) Applicant: SVOLT ENERGY TECHNOLOGY CO., LTD, Changzhou, Jiangsu 213200 (CN)
(72) Inventor: QIAO, Qiqi, hangzhou, Jiangsu 213200 (CN); JIANG, Weijun, hangzhou, Jiangsu 213200 (CN); XU, Xinpei, hangzhou, Jiangsu 213200 (CN); SHI, Zetao, hangzhou, Jiangsu 213200 (CN); MA, Jiali, hangzhou, Jiangsu 213200 (CN)
(74) Representative: Novagraaf Technologies
(86) International application number: PCT/CN2020/132904
(87) International publication number: WO 2021/143373

(57) **Abstract**

The present disclosure provides a cobalt-free lamellar cathode material and a method for preparing the cobalt-free lamellar cathode material, and a lithium ion battery. The cobalt-free lamellar cathode material is of a core-shell structure, and a material forming an outer shell of the core-shell structure comprises titanium nitride and a material forming an inner core of the core-shell structure does not comprise cobalt and is of a monocrystal structure. According to the cobalt-free lamellar cathode material provided by the present disclosure, the surface of the cobalt-free inner core is coated with highly conductive titanium nitride, such that while the price cost of the cathode material is lowered, the rate capability of the cathode material can be improved, and thus the rate capability of the cobalt-free cathode material is better.

## Description

### Technical Field

The disclosure belongs to the technical field of cathode materials of lithium ion batteries, in particular to a cobalt-free lamellar cathode material and a method for preparing the cobalt-free lamellar cathode material, and a lithium ion battery.

### Background

At present, ternary cathode materials are applied to lithium ion power batteries wider and wider. A conventional ternary cathode material usually contains cobalt, and the cobalt is the highest in price among three elements, resulting in a much higher price of the ternary cathode material compared with the price of other cathode materials such as LiFePO4 and LiMn2O4. Therefore, the ternary cathode material is developed toward a low cobalt direction, even a cobalt-free direction.

Although the cobalt-free lamellar cathode material has a higher capacity and a lower cost, on the contrary, no cobalt makes conductivity of the cathode material decrease, thereby further affecting the rate capability of the material.

### Summary

The present disclosure is accomplished based on discoveries of the inventors below:

Aiming at the technical problem of poor conductivity and rate capability of the cobalt-free cathode material, the present disclosure provide a cathode material coated with highly conductive titanium nitride on a same, such that the surface conductivity of the cobalt-free material can be improved and the surface impedance of the cobalt-free material can be further reduced, thereby improving electrical properties of the cobalt-free material, for example, cycle performance, rate capability and the like.

In a first aspect of the present disclosure, the present disclosure provides a cobalt-free lamellar cathode material.

According to the embodiments of the present disclosure, the cobalt-free lamellar cathode material is of a core-shell structure, and a material forming an outer shell of the core-shell structure includes titanium nitride and a material forming an inner core of the core-shell structure does not include cobalt and is of a monocrystal structure.

According to the cobalt-free lamellar cathode material provided by the present disclosure, the surface of the cobalt-free inner core is coated with highly conductive titanium nitride, such that while the price cost of the cathode material is lowered, the rate capability of the cathode material can be improved, and thus the rate capability of the cobalt-free cathode material is better.

In addition, the cobalt-free lamellar cathode material according to the embodiments of the present disclosure further can have the following additional technical characteristics:

According to the embodiments of the present disclosure, the material forming the inner core is LiNixMnyO2, wherein, 0.55≤x≤0.95, 0.05≤y≤0.45.

According to the embodiments of the present disclosure, a particle size of the material forming the inner core is 1-5 microns.

According to the embodiments of the present disclosure, a thickness of the outer shell is 50-500 nm.

According to the embodiments of the present disclosure, in the core-shell structure, a content of titanium nitride is 0.13-0.39% (wt).

In a second aspect of the present disclosure, the present disclosure provides a method for preparing the cobalt-free lamellar cathode material.

According to the embodiments of the present disclosure, the method includes: providing an inner core material, wherein the inner core material does not include cobalt and is of a monocrystal structure; coating a surface of the inner core material with a compound of titanium, wherein the compound of titanium is tetravalent titanium; and conducting ammonia gas treatment on the coated inner core material to obtain the cobalt-free lamellar cathode material coated with titanium nitride.

By adopting the method provided the embodiments of the present disclosure, the surface of the inner core material is coated with the titanic compound first, and then the outer shell of titanium nitride is then treated in ammonia gas, such that the surface of the cobalt-free inner core material is coated with the highly conductive titanium nitride outer shell, and therefore, the prepared cobalt-free lamellar cathode material is better in electrical property. Furthermore, the method is simple in step and has a potential of batched production.

In addition, the method according to the embodiments of the present disclosure further can have the following additional technical characteristics:

According to the embodiments of the present disclosure, the step of providing an inner core material includes: conducting calcining treatment on a precursor mixture to obtain the inner core material, wherein the precursor mixture comprises a precursor of lithium and a precursor of nickel manganese, and the calcining treatment is conducted for 10-15 hours at 800-1000 degrees centigrade.

According to the embodiments of the present disclosure, the compound of titanium includes at least one of titanium dioxide and tetrabutyl titanate.

According to the embodiments of the present disclosure, high-temperature treatment of coating is conducted for 4-8 hours at 400-700 degrees centigrade.

According to the embodiments of the present disclosure, the ammonia gas treatment is conducted for 3-5 hours at 400-700 degrees centigrade.

In a third aspect of the present disclosure, the present disclosure provides a lithium ion battery.

According to the embodiments of the present disclosure, the lithium ion battery includes a cathode, an electrolyte and an anode, wherein the cathode is formed by the cobalt-free lamellar cathode material.

According to the lithium ion battery provided by the embodiments of the present disclosure, the positive electrode of the lithium ion battery is formed by the cobalt-free lamellar cathode material which is lower in cost and better in rate capability, such that the price of the lithium ion battery is lowered and the lithium ion battery is better in electrochemical property. It can be understood by those skilled in the art that aforementioned characteristics and advantages of the cobalt-free lamellar cathode material are still applicable to the lithium ion battery, and are not repeatedly described herein.

The additional aspects and advantages of the present disclosure will be set forth in part in the description which follows, and will be known from the practice of the present disclosure.

### Brief Description of the Drawings

Drawings of the description constituting a portion of the present application are used to provide a further understanding to the prevent disclosure; and schematic examples and its specification of the prevent disclosure are intended for explaining the prevent disclosure, and should not be construed to unduly limit this disclosure. In the drawings:
Fig. 1 is a cross-section structural schematic diagram of the cobalt-free lamellar cathode material with the core-shell structure of one embodiment of the present disclosure;
Fig. 2 is an electron microscope picture of the cobalt-free lamellar cathode material of one embodiment of the present disclosure before being coated (a) (b) and after being coated (c) (d);
Fig. 3 is a charge and discharge curve of a first cycle of the cobalt-free lamellar cathode material of one embodiment of the present disclosure before being coated and after being coated;
Fig. 4 is a cycle retention ratio comparison of the cobalt-free lamellar cathode material of one embodiment of the present disclosure before being coated and after being coated;
Fig. 5 is a specific discharge capacity comparison on different rates of the cobalt-free lamellar cathode material of one embodiment of the present disclosure before being coated and after being coated.

### Detailed Description of the Embodiments

Detailed description on the present disclosure is made below. Those skilled in the art will understand that the embodiments below are used for explaining the present disclosure and are not to limit the scope of the present disclosure. Unless otherwise specified, those skilled in the art can carry out the embodiments without specific technologies or conditions indicated according to common technologies or conditions in the art or a product specification.

In an aspect of the present disclosure, the present disclosure provides a cobalt-free lamellar cathode material.

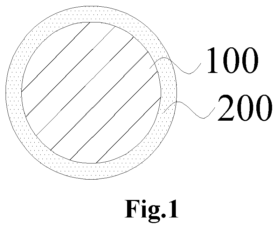

According to the embodiments of the present disclosure, referring to the Fig. 1, the cobalt-free lamellar cathode material is of a core-shell structure, and a material forming an outer shell 200 of the core-shell structure includes titanium nitride and a material forming an inner core 100 of the core-shell structure does not include cobalt and is of a monocrystal structure. The inventor of the present disclosure finded in a research process that although the cost of the ternary cathode material of the lithium ion power battery is lowered somewhat along with low cobalt development, the conductivity of the cathode material will be decreased as the content of cobalt is lower, resulting in poor rate capability. Therefore, the surface of the cobalt-free inner core 100 is coated with a layer of titanium nitride (TiN) outer shell 200 by the inventor, such that the conductivity of the cobalt-free lamellar cathode material can be improved obviously, and therefore, the rate capability of the cobalt-free lamellar cathode material is better.

In some embodiment of the present disclosure, the material forming the inner core 100 can be LiNiₓMn_{y}O₂, wherein, 0.55≤x≤0.95, 0.05≤y≤0.45, for example, LiNi_{0.75}Mn_{0.25}O₂ in particular, such that the cobalt (Co)-free inner core material can make the capacity of the cobalt-free lamellar cathode material higher and the cost of the cobalt-free lamellar cathode material lower, thereby facilitating commercial application. Meanwhile, it should be noted that it is obtained by the inventor of the present disclosure via a lot of experiments that LiNiₓMnyO₂ (0.55≤x≤0.95, 0.05≤y≤0.45) is taken as the inner core material. Compared with other inner core materials, the battery performance of the cathode material jointly formed by the inner core material and the titanium nitride coating can be further improved, and the cathode material has better rate performance, capacity and higher capacity retention ratio.

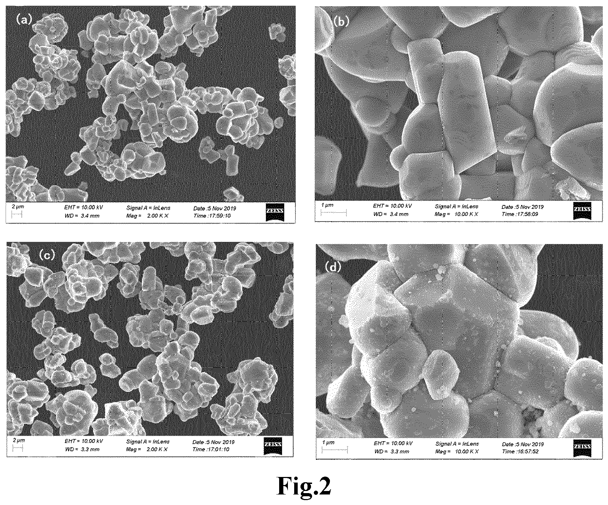

In some embodiments of the present disclosure, the particle size of the material forming the inner core 100 can be 1-5 microns. Thus, by adopting the monocrystal structure of the size, the monocrystal structure can shrink and expand in a later cyclic charge-discharge process and a condition that poly-crystal particles generate crystal boundary interfaces or side reactions is avoided, such that the cycling stability of the cobalt-free lamellar cathode material is better. Specifically, referring to (a) and (b) of the Fig. 2, the surface of the inner core material before being coated is relatively smooth and the particle size is 1-5 microns, and referring to (c) and (d) of the Fig. 2, the surface of the coated cathode material has an obvious coating.

In some embodiments of the present disclosure, the particle size of the titanium nitride material forming the outer shell 200 can be 50-500 nm, for example smaller than 100 nm in particular. An outer surface of the inner core 100 can be more uniformly coated with the highly conductive titanium nitride, such that the cycling stability of the cobalt-free lamellar cathode material is better.

In some embodiments of the present disclosure, in the core-shell structure, the content of titanium nitride (TiN) is 0.13-0.39% (wt), i.e., the adding amount of titanium can be 0.10-0.30% (wt). Thus, the first cycle charge-discharge specific capacities can be increased by 3% and the capacity retention ratio in 50 cycles of cycles at 1C rate is higher than 99% only by coating the surface of the cobalt-free lamellar cathode material with 0.1% to 0.4% titanium nitride outer shell, and the specific discharge capacities at 2C and 4C rates are increased by 10% or above.

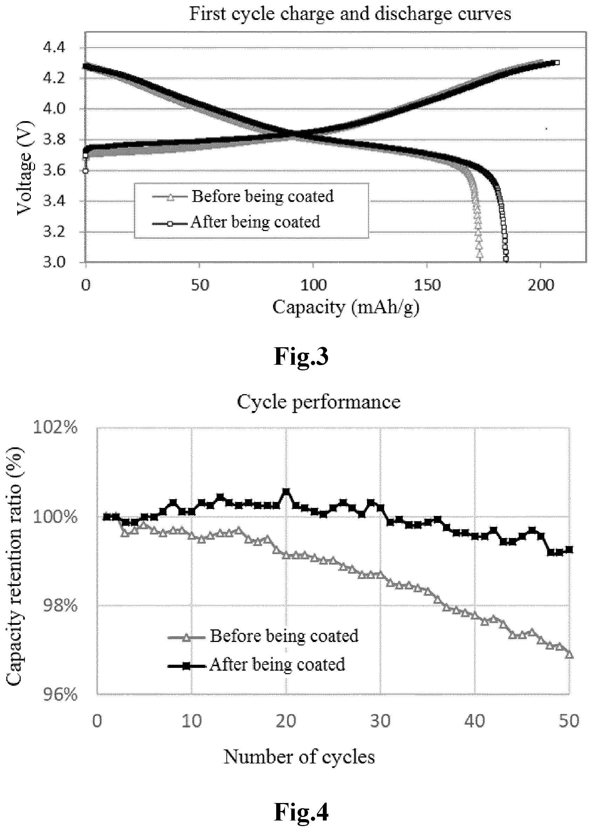

Specifically, by taking LiNi0.75Mn0.25O2 as a cobalt-free monocrystal cathode material, the first charge and discharge curve can be referred to the Fig. 3. The first cycle charge and discharge specific capacities at 0.1C of the cathode material before being coated are 200.5 and 173.3 mAh/g respectively and the first efficiency is 86.4%. The first cycle charge and discharge specific capacities at 0.1C of the cathode material after being coated are 207.5 and 185.0 mAh/g respectively and the first efficiency is 89.2%. It means that coating the coated titanium nitride facilitates increase of the capacity and the first efficiency of the cobalt-free lamellar cathode material.

In addition, comparison on cycle performance before and after coating can refer to the Fig. 4 at 25°C with a rate of 0.5C or 1C and a voltage of 3.0-4.3V. The capacity retention ratio of the material before being coated after 50 cycles at a rate of 1C is 96.9%. The capacity retention ratio of the material after being coated after 50 cycles at a rate of 1C is 99.3%. It means the coating of titanium nitride avoids contact of the cobalt-free lamellar cathode material and the electrolyte to reduce side reactions between the cobalt-free lamellar cathode material and the electrolyte, thereby increasing the cycle performance by 2.4%.

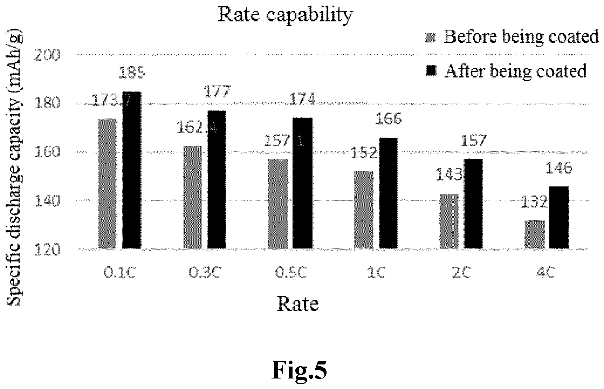

Furthermore, the rate performance before and after coating can refer to the Fig. 5. The specific discharge capacity of the cathode material before being coated is merely 143 mAh/g and the specific discharge capacity of the cathode material after being coated is 157 mAh/g. For the rate of 4C, the specific discharge capacity of the material before being coated is merely 132 mAh/g and the specific discharge capacity of the material after being coated is merely 146 mAh/g. It means titanium nitride is good in conductivity and can improve the electrochemical property of the cobalt-free lamellar cathode material, thereby improving the rate performance of the material by 10% or above.

In conclusion, according to the embodiments of the present disclosure, the prevent disclosure provides a cobalt-free lamellar cathode material, the surface of the cobalt-free inner core is coated with highly conductive titanium nitride, such that the rate capability of the cathode material can be improved while the price of the cathode material is lowered, and therefore, the rate capability of the cobalt-free cathode material is better.

In another aspect of the present disclosure, the present disclosure provides a method for preparing the cobalt-free lamellar cathode material. According to the embodiments of the present disclosure, the method includes:
S100: an inner core material is provided.

In the step, the inner core material is provided, and the inner core material does not include cobalt (Co). The S100 can include: conducting calcining treatment on a precursor mixture to obtain the inner core material, wherein the precursor mixture includes a precursor of lithium (Li) and a precursor of nickel (Ni) and manganese (Mn), and the calcining treatment is conducted for 10-15 hours at 800-1000 degrees centigrade.

In some embodiments of the present disclosure, the precursor of lithium can be lithium hydroxide (LiOH) or a lithium salt such as lithium carbonate (Li2CO3). The precursor of nickel manganese can be NixMny(OH)2, wherein, 0.55≤x≤0.95, 0.05≤y≤0.45. Thereby forming the cobalt-free inner core material LiNixMnyO2, for example LiNi0.75Mn0.25O2 in particular. Therefore, the preparation cost and the price are lower while the capacity of the cobalt-free lamellar cathode material is higher.

Specifically, LiOH or Li2CO3 and NixMny(OH)2 (0.55≤x≤0.95, 0.05≤y≤0.45) can be mixed by adopting a high speed mixing apparatus, wherein a rotating speed is 800-900 rpm, and a mixing time is 5-20 minutes; the mixture is calcined in a kiln for 10-15 hours at 800-1000°C in an atmosphere of O2, and a concentration of O2 is greater than 90%; and a sintered material is crushed by double rollers and crushed mechanically, and the crushed material is screened by a 300-400-mesh sieve to obtain the inner core material.

S200: a surface of the inner core material is coated with a compound of titanium.

In the step, a surface of the inner core material is coated with a compound of titanium, wherein the compound of titanium is a compound of tetravalent titanium (Ti4+). In some embodiments of the present disclosure, the compound of titanium can include at least one of titanium dioxide and tetrabutyl titanate. In some specific embodiments, the compound of titanium can be titanium dioxide (TiO2). Thus, titanium oxide wide in source and lower in cost is selected as a coating material, such that the preparation cost of the cobalt-free lamellar cathode material is lower, and the coated outer shell layer is more uniform.

Specifically, the crushed and screened material in the S100 can be mixed with TiO2 first, wherein a coating content of Ti is 0.10-0.30%(wt), a rotating speed is 800-950 rpm and a mixing time is 5-50 minutes; and then high-temperature treatment is conducted on the mixture for 4-8 hours at 400-700 degrees centigrade to obtain a coated product.

S300: ammonia gas treatment is conducted on the coated inner core material to obtain the cobalt-free lamellar cathode material coated with titanium nitride.

In the step, ammonia gas treatment is conducted on the coated inner core material to obtain the cobalt-free lamellar cathode material coated with titanium nitride. As reducing gas, ammonia gas can reduce unstable Ni3+ of the cathode material to stable Ni2+, such that the structural stability of the material is improved. Meanwhile, NH3 further can nitride the surface of the cathode material under a condition of high temperature, such that the surface conductivity of the nitrided surface is improved and the heat resistance and the corrosion resistance are improved obviously.

Specifically, the coated product in the S200 can be treated in ammonia gas, wherein a temperature is 400-700 degrees centigrade, a time is 3-5 hours and the product is cooled naturally; and finally, the material coated with titanium nitride is screened by the 300-400-mesh sieve to obtain a final product. In some embodiments of the present disclosure, the specific surface area of the cobalt-free lamellar cathode material coated with titanium nitride can be 0.1-0.8 m2/g, a content of residual alkali is smaller than or equal to 0.5%, and pH is not greater than 12.

In conclusion, according to the embodiments of the present disclosure, the present disclosure provides a method. The surface of the inner core material is coated with the titanic compound first, and then the outer shell of titanium nitride is then treated in ammonia gas, such that the surface of the cobalt-free inner core material is coated with the highly conductive titanium nitride outer shell, and therefore, the prepared cobalt-free lamellar cathode material is better in electrical property. Furthermore, the method is simple in step and has a potential of batched production.

In another aspect of the present disclosure, the present disclosure provides a lithium ion battery. According to the embodiments of the present disclosure, the lithium ion battery includes a cathode, an electrolyte and an anode, wherein the cathode is formed by the cobalt-free lamellar cathode material. It should be noted that besides the cathode, the electrolyte and the anode, the lithium ion battery further includes other necessary compositions and structures, for example an outer shell, an electrode leading-out terminal and the like in particular. Those skilled in the art can supplement correspondingly according to specific design requirements of the lithium ion battery and it is not described repeatedly herein.

According to the lithium ion battery provided by the embodiment of the present disclosure, the positive electrode of the lithium ion battery is formed by the cobalt-free lamellar cathode material which is lower in cost and better in rate capability, such that the price of the lithium ion battery is lowered and the lithium ion battery is better in electrochemical property. It can be understood by those skilled in the art that aforementioned characteristics and advantages of the cobalt-free lamellar cathode material are still applicable to the lithium ion battery, and are not repeatedly described herein.

In description of the present disclosure, it should be understood that terms 'first' and 'second' are only used for a description purpose rather than being construed to indicate or imply relative importance or implicitly indicate the quantity of indicated technical features. Thus, features defining 'first', 'second' and the like can expressively or implicitly include at least one feature. In the description of the present disclosure, the meaning of "a plurality" is at least two, such as two, three, etc., unless specifically defined otherwise.

In the description of this specification, descriptions with reference to the terms, such as "one embodiment", "some embodiments", "examples", "specific examples", or "some examples", mean that the specific features, structures, materials or characteristics described in conjunction with the embodiments or examples are included in at least one embodiment or example of the present disclosure. In the present specification, the schematic representation of the above terms does not necessarily mean the same embodiment or example. Furthermore, the particular features, structures, materials, or characteristics described may be combined in a suitable manner in any one or more embodiments or examples. In addition, various embodiments or examples described in the specification, as well as features of various embodiments or examples, may be combined and combined by those skilled in the art without contradicting each other.

Further description on beneficial effects of the present disclosure will be made below:

### Example 1

S100: an inner core material is provided.

The lithium salt lithium hydroxide (LiOH) and the precursor Ni0.75Mn0.25(OH)2 of nickel manganese are mixed by adopting a high speed mixing apparatus, wherein a rotating speed is 900 rpm, and a mixing time is 20 minutes; the mixture is calcined in a kiln for 10 hours at 950°C in an atmosphere of O2, and a concentration of O2 is greater than 90%; and a sintered material is crushed by double rollers and crushed mechanically, and the crushed material is screened by a 300-mesh sieve to obtain the inner core material LiNi0.75Mn0.25O2.

S200: a surface of the inner core material is coated with a compound of titanium.

The crushed and screened material in the S100 is mixed with TiO2 first, wherein a coating content of Ti is 0.30%(wt), a rotating speed is 950 rpm and a mixing time is 30 minutes; and then high-temperature treatment is conducted on the mixture for 8 hours at 600 degrees centigrade to obtain a coated product.

S300: ammonia gas treatment is conducted on the coated inner core material to obtain the cobalt-free lamellar cathode material coated with titanium nitride.

The coated product in the S200 can be treated in ammonia gas, wherein a temperature is 600 degrees centigrade, a time is 5 hours and the product is cooled naturally; and finally, the material coated with titanium nitride is screened by the 400-mesh sieve to obtain a final product. In some embodiments of the present disclosure, the specific surface area of the cobalt-free lamellar cathode material coated with titanium nitride can be 0.6 m2/g, a content of residual alkali is smaller than or equal to 0.2%, and pH is equal to 11.60.

According to the prepared cobalt-free lamellar cathode material coated with titanium nitride, an average size of the inner core is 3µm and an average thickness of the coating is 500 nm.

### Example 2

S100: an inner core material is provided.

The lithium salt lithium hydroxide (LiOH) and the precursor Ni0.95Mn0.05(OH)2 of nickel manganese are mixed by adopting a high speed mixing apparatus, wherein a rotating speed is 900 rpm, and a mixing time is 20 minutes; the mixture is calcined in a kiln for 10 hours at 750°C in an atmosphere of O2, and a concentration of O2 is greater than 90%; and a sintered material is crushed by double rollers and crushed mechanically, and the crushed material is screened by a 300-mesh sieve to obtain the inner core material LiNi0.95Mn0.05O2.

S200: same with the example 1.

S300: same with the example 1.

### Example 3

S100: an inner core material is provided.

The lithium salt lithium hydroxide (LiOH) and the precursor Ni0.55Mn0.45(OH)2 of nickel manganese are mixed by adopting a high speed mixing apparatus, wherein a rotating speed is 900 rpm, and a mixing time is 20 minutes; the mixture is calcined in a kiln for 10 hours at 1000°C in an atmosphere of O2, and a concentration of O2 is greater than 90%; and a sintered material is crushed by double rollers and crushed mechanically, and the crushed material is screened by a 300-mesh sieve to obtain the inner core material LiNi0.55Mn0.45O2.

S200: same with the example 1.

S300: same with the example 1.

### Example 4

S100: an inner core material is provided.

The lithium salt lithium hydroxide (LiOH) and the precursor Ni0.45Mn0.55(OH)2 of nickel manganese are mixed by adopting a high speed mixing apparatus, wherein a rotating speed is 900 rpm, and a mixing time is 20 minutes; the mixture is calcined in a kiln for 10 hours at 1050°C in an atmosphere of O2, and a concentration of O2 is greater than 90%; and a sintered material is crushed by double rollers and crushed mechanically, and the crushed material is screened by a 300-mesh sieve to obtain the inner core material LiNi0.45Mn0.55O2.

S200: same with the example 1.

S300: same with the example 1.

### Example 5

S100: an inner core material is provided.

Same with the method in the example 1 and the difference lies in a high temperature 970°C;

S200: a surface of the inner core material is coated with a compound of titanium.

The crushed and screened material in the S100 is mixed with TiO2 first, wherein a coating content of Ti is 0.10%(wt), a rotating speed is 950 rpm and a mixing time is 30 minutes; and then high-temperature treatment is conducted on the mixture for 8 hours at 600 degrees centigrade to obtain a coated product.

S300: ammonia gas treatment is conducted on the coated inner core material to obtain the cobalt-free lamellar cathode material coated with titanium nitride.

The coated product in the S200 can be treated in ammonia gas, wherein a temperature is 600 degrees centigrade, a time is 5 hours and the product is cooled naturally; and finally, the material coated with titanium nitride is screened by the 400-mesh sieve to obtain a final product.

According to the prepared cobalt-free lamellar cathode material coated with titanium nitride, an average size of the inner core is 5µm and an average thickness of the coating is 50 nm.

### Example 6

S100: an inner core material is provided.

Same with the method in the example 1 and the difference lies in a high temperature 990°C;

S200: a surface of the inner core material is coated with a compound of titanium.

The crushed and screened material in the S100 is mixed with TiO2 first, wherein a coating content of Ti is 0.40%(wt), a rotating speed is 950 rpm and a mixing time is 30 minutes; and then high-temperature treatment is conducted on the mixture for 8 hours at 600 degrees centigrade to obtain a coated product.

S300: ammonia gas treatment is conducted on the coated inner core material to obtain the cobalt-free lamellar cathode material coated with titanium nitride.

The coated product in the S200 can be treated in ammonia gas, wherein a temperature is 600 degrees centigrade, a time is 5 hours and the product is cooled naturally; and finally, the material coated with titanium nitride is screened by the 400-mesh sieve to obtain a final product.

According to the prepared cobalt-free lamellar cathode material coated with titanium nitride, an average size of the inner core is 6 µm and an average thickness of the coating is 700 nm.

### Comparative example 1

Same with the example 3 in other aspects and the difference lies in that the steps S200 and S300 are not conducted, and the cathode material is merely LiNi0.55Mn0.45O2.

### Comparative example 2

Same with the example 1 and the difference lies in that the precursor is Ni0.75Mn0.20Co0.05(OH)2 and the inner core material is LiNi0.75Mn0.20Co0.05O2.

S200: same with the example 1.

S300: same with the example 1.

Properties characterization: properties characterization is conducted on the cathode materials prepared in the embodiments and the comparative examples, specifically as follows: the cathode material is homogenized and coated to manufacture the cathode piece and is then assembled as the lithium ion battery, and the anode is a metal lithium piece; the battery diaphragm is a Celgard2400 microporous polypropylene film; and the electrolyte is LiPF6 (lithium Hexafluorophosphate)/EC (ethylene carbonate)-DMC (dimethyl carbonate), and a battery model is R2032. Cycle performance, capacity and the like of the battery are tested, and results are as shown in a table 1:

**Table 1**

| Performance | First cycle charge capacity (mAh/g) | First cycle specific discharge capacity (mAh/g) | First time efficiency (%) | 50-cycle cyclic capacity retention ratio (%) |
|---|---|---|---|---|
| Example 1 | 207.5 | 185.0 | 89.2 | 99.3 |
| Example 2 | 232.1 | 212.4 | 91.5 | 96.8 |
| Example 3 | 190.9 | 162.9 | 85.3 | 98.6 |
| Example 4 | 180.9 | 153.2 | 84.7 | 98.4 |
| Example 5 | 199.1 | 170.8 | 85.8 | 97.8 |
| Example 6 | 196.9 | 167.4 | 85.0 | 98.2 |
| Comparative example 1 | 182.5 | 158.6 | 85.0 | 97.3 |
| Comparative example 2 | 205.9 | 186.3 | 90.5 | 98.9 |

Although the embodiments of the present have been shown and described above, it can be understood that the embodiments are exemplary and cannot be construed as limitation to the present disclosure. Those skilled in the art can make changes, modification, replacement and transformation on the embodiments within the scope of the present disclosure.

## Claims

1. The cobalt-free lamellar cathode material, wherein that the cobalt-free lamellar cathode material is of a core-shell structure, and a material forming an outer shell of the core-shell structure comprises titanium nitride and a material forming an inner core of the core-shell structure does not comprise cobalt and is of a monocrystal structure.

2. The cobalt-free lamellar cathode material according to claim 1, wherein that the material forming the inner core is LiNiₓMn_{y}O₂, wherein, 0.55≤x≤0.95, 0.05≤y≤0.45.

3. The cobalt-free lamellar cathode material according to claim 2, wherein that a particle size of the material forming the inner core is 1-5 microns.

4. The cobalt-free lamellar cathode material according to claim 1, wherein that a thickness of the outer shell is 50-500 nm.

5. The cobalt-free lamellar cathode material according to claim 1, wherein that in the core-shell structure, a content of titanium nitride is 0.13-0.39% (wt).

6. A method for preparing the cobalt-free lamellar cathode material, comprising:
providing an inner core material, wherein the inner core material does not comprise cobalt and is of a monocrystal structure;
coating a surface of the inner core material with a compound of titanium, wherein the compound of titanium is tetravalent titanium; and
conducting ammonia gas treatment on the coated inner core material to obtain the cobalt-free lamellar cathode material coated with titanium nitride.

7. The method according to claim 6, wherein that the step of providing an inner core material comprises:
conducting calcining treatment on a precursor mixture to obtain the inner core material, wherein the precursor mixture comprises a precursor of lithium and a precursor of nickel manganese, and the calcining treatment is conducted for 10-15 hours at 800-1000 degrees centigrade.

8. The method according to claim 6, wherein that the compound of titanium comprises at least one of titanium dioxide and tetrabutyl titanate.

9. The method according to claim 6, wherein that high-temperature treatment of coating is conducted for 4-8 hours at 400-700 degrees centigrade, and the ammonia gas treatment is conducted for 3-5 hours at 400-700 degrees centigrade.

10. A lithium ion battery, comprising a cathode, an electrolyte and an anode, wherein that the cathode is formed by the cobalt-free lamellar cathode material according to any one of claims 1-5.
